(19) Europäisches Patentamt
European Patent Office
Office européen des brevets

(11) Veröffentlichungsnummer: **0 081 694**
**B1**

(12) # EUROPÄISCHE PATENTSCHRIFT

(45) Veröffentlichungstag der Patentschrift: **13.02.85**

(51) Int. Cl.⁴: **C 07 F 9/48**

(21) Anmeldenummer: **82110560.8**

(22) Anmeldetag: **16.11.82**

(54) **Verfahren zur Herstellung von Phosphonigsäuremonoalkylestern.**

(30) Priorität: **21.11.81 DE 3146197**

(43) Veröffentlichungstag der Anmeldung:
**22.06.83 Patentblatt 83/25**

(45) Bekanntmachung des Hinweises auf die Patenterteilung:
**13.02.85 Patentblatt 85/7**

(84) Benannte Vertragsstaaten:
**BE CH DE FR GB IT LI NL**

(56) Entgegenhaltungen:
**SU - A - 161 748**
**SU - A - 172 792**

**Chemical Abstracts Band 79, Nr. 23, 10 Dezember 1973, Columbus, Ohio, USA, L.T. ELEPINA et al. "Phosphorylation of xylitol by phosphonous acids", Seite 410, Spalte 1, Abstract Nr. 137424s**
**Chemical Abstracts, Band 72, Seite 398, Zusammenfassung Nr. 10835f 1970**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr., Altkönigstrasse 11a, D-6242 Kronberg/Taunus (DE)**
Erfinder: **Thamm, Horst-Dieter, Dr., Parkstrasse 25, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 081 694 B1

BUNDESDRUCKEREI BERLIN

**Beschreibung**

Phosphonigsäuremonoalkylester sind Verbindungen der allgemeinen Formel

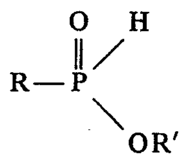

worin

R = organischer Rest und
R' = aliphatischer Rest.

Sie sind hauptsächlich Zwischenprodukte auf verschiedenen Sachgebieten, wie z. B. auf dem Flammschutz- und Pflanzenschutzsektor, dem Gebiet der Metallextraktionsmittel usw.

Zu ihrer Herstellung ist eine Reihe verschiedener Verfahren bekannt. Ein solches bekanntes Verfahren geht z. B. aus von Dihalogenphosphinen, insbesondere von Dichlorphosphinen, welche mit Alkoholen entsprechend der nachstehenden Formelgleichung umgesetzt werden (vgl. DE-OS 2 519 192):

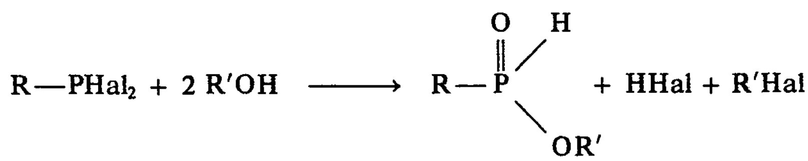

(Hal = Halogen, insbesondere Cl)

Für dieses Verfahren ist jedoch die Bildung äquimolarer Mengen Halogenwasserstoff und Alkylhalogenid — insbesondere der letzteren — als Nebenprodukte nachteilig.

Von diesem Nachteil frei ist das von den russischen Autoren E. E. Nifant'ev, L. T. Elepina und V. N. Balakhontseva in Zh. Obsh. Khim., Vol. 42, Nr. 7, S. 1480—85, engl. Ausgabe S. 1472—75 (insbesondere experimenteller Teil S. 1474), beschriebene Verfahren der direkten Veresterung freier phosphoniger Säuren mit einem Alkohol. Nach den beiden einzigen in diesem Artikel offenbarten Beispielen wird Hexyl- und Nonyl-phosphonige Säure mit Butanol in p-Xylol bzw. Toluol erhitzt und das dabei entstehende Reaktionswasser azeotrop abdestilliert. Da die binären Azeotrope

Butanol-p-Xylol bei 116,2°C,
Butanol-Toluol bei 105,7°C und
Butanol-Wasser bei etwa 92,5°C

sieden (bei Normaldruck; s. Beilsteins Handbuch der organischen Chemie, 4. Aufl., E III1, Springer Verlag, 1964, S. 1489), können die ternären Azeotrope Butanol-p-Xylol oder Toluol-Wasser kaum über etwa 116°C sieden. Die Reaktionstemperatur kann dann wohl kaum über höchstens etwa 120°C betragen.

Die Ausbeuteangaben in der Veröffentlichung der vorerwähnten russischen Autoren liegen bei 72 und 55% d. Th. an destilliertem Monobutylester der Hexyl- bzw. Nonylphosphonigen Säure.

Nach einer weiteren Arbeit von Nifant'ev et al. (Zj. Prikl. Khim., Bd. 42, Seiten 2590—2593, 1969, referiert in Chemical Abstracts, Bd. 72, Zusammenfassung Nr. 100 835 f, 1970) sollen nach dem gleichen Reaktionsprinzip (direkte Veresterung freier phosphoniger Säuren mit einem Alkohol oder auch Phenol in Gegenwart von Toluol als Schleppmittel für das entstehende Reaktionswasser) folgende Phosphonigsäuremonoester mit den in Klammern angegebenen Ausbeuten erhalten werden:

Butanphosphonigsäurecyclohexylester

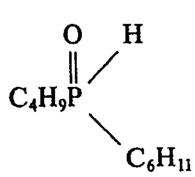

(70%)

Pentanphosphonigsäure-cyclohexylester

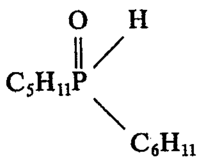

(71%)

Hexanphosphonigsäure-cyclohexylester

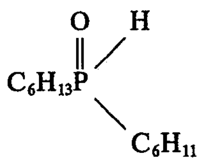

(83%)

und
Butanphosphonigsäure-phenylester

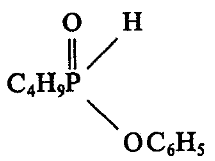

(ohne Ausbeuteangabe)

Nifant'ev et al. haben diese Reaktionsweise schließlich auch zur Phosphorylierung von Kohlenhydraten (= Polyalkohole) angewandt (Zh. Obshch. Khim., 1973, 43 [8], 1811—16, referiert in Chemical Abstracts, Bd. 79, Zusammenfassung Nr. 137 424 s, 1973). Danach wurden u. a. hexyl- und nonylphosphonige Säure mit Xylit und Glukose in rückfließendem Xylol unter azeotroper Entfernung des entstehenden Reaktionswassers zur Reaktion gebracht. Die Ausbeuten der entsprechenden Phosphonigsäureester sollen hier z. T. über 90% betragen. Kohlenhydrate sind jedoch hinsichtlich ihrer Eigenschaften von normalen Monoalkoholen ziemlich verschieden und daher mit diesen nicht direkt vergleichbar.

Die Ausbeuten bei der direkten Veresterung freier phosphoniger Säuren mit Monoalkoholen liegen nach dem vorerwähnten Stand der Technik durchweg nicht höher als bei etwa 70% d. Th. und erreichen nur im Ausnahmefall (Hexanphosphonigsäure-cyclohexylester!) eine Größenordnung um 80%. Für die Durchführung im technischen Maßstab sind durchschnittliche Ausbeuten bis zu etwa 70% d. Th. jedoch kaum ausreichend. Eine Ausbeuteverbesserung erschien auch nicht etwa durch die Anwendung einer höheren Reaktionstemperatur möglich, weil da zu erwarten war, daß ein noch höherer Anteil des Ausgangsproduktes (phosphonige Säure) in die entsprechende Phosphonsäure und primäres Phosphan disproportioniert und damit der gewünschten Reaktion entzogen wird.

Nach Houben—Weyl, Methoden der organischen Chemie, Bd. XII/1 (1963), S. 64, sollen nämlich phosphonige Säuren bei Temperaturen spätestens ab etwa 100°C in mit steigender Temperatur zunehmendem Maß in die jeweiligen Phosphonsäuren und primären Phosphane disproportionieren:

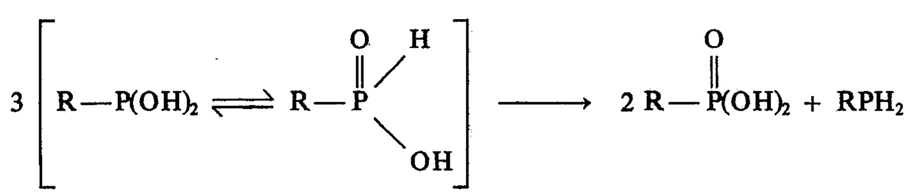

phosphonige Säure — Phosphonsäure — Phosphan

Bei cyclohexylphosphoniger Säure findet diese Disproportionierung allerdings erst bei erheblich höherer Temperatur — nämlich erst ab etwa 230°C — statt (Zeitschrift für allgemeine Chemie [russisch], Bd. 51, Ausgabe 8, Seiten 1743 bis 1747 [1980]). Wegen dieser außerordentlichen thermischen Stabilität ist die cyclohexylphosphonige Säure mit den übrigen (organischen) phosphonigen Säuren kaum vergleichbar. Daher verwundert auch nicht, daß cyclohexylphosphonige Säure bei 140 bis 145°C mit Hexanol (in Benzol/Toluol) ohne Nachteil direkt verestert werden kann (SU-A-172 792).

In dem Bestreben, die vorerwähnten — bei Temperaturen bis zu maximal etwa 120°C arbeitenden — Verfahren der direkten Veresterung der thermisch ab etwa 100°C instabilen bzw. ab dieser Temperatur zunehmend instabiler werdenden phosphonigen Säuren — nicht also etwa der thermisch außerordentlich stabilen cyclohexylphosphonigen Säure — mit einwertigen Alkoholen insbesondere in Richtung auf eine Erhöhung der Ausbeute an den entsprechenden Phosphonigsäuremonoalkylestern zu verbessern, wurde nun überraschenderweise gefunden, daß sich dieses Ziel — in völligem Gegensatz

zu dem etwa aufgrund von Houben—Weyl a.a.O. zu Erwartenden — gerade durch die Anwendung einer höheren Reaktionstemperatur erreichen läßt.

Erfindungsgegenstand ist somit ein Verfahren zur Herstellung von Phosphonigsäuremonoalkylestern durch Veresterung phosphoniger Säuren mit Alkoholen unter azeotroper Abscheidung des bei der Veresterung entstehenden Wassers; das Verfahren ist dadurch gekennzeichnet, daß man phosphonige Säuren der Formel

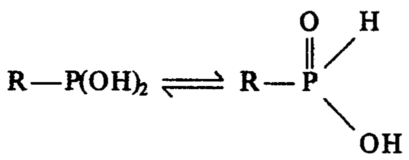

in welcher R = $C_1$ — $C_4$-Alkyl, Benzyl oder Phenyl, mit Alkoholen der Formel

R'OH

in welcher R' = $C_4$—$C_{20}$-Alkyl, insbesondere $C_5$—$C_8$-Alkyl, bei Temperaturen von 125 bis 220°C, vorzugsweise von 130 bis 180°C, verestert.

Die Ausbeuten an (destillierten) Phosphonigsäuremonoalkylestern liegen bei dieser Verfahrensweise durchweg bei etwa 90% d. Th. und darüber.

Als phosphonige Säuren können für das Verfahren Methan-, Ethan-, n- und i-Propan-, n-, i- und tert.-Butan-, Benzyl- und Benzol-phosphonige Säure eingesetzt werden.

Die phosphonigen Säuren können ihrerseits nach den bekannten einschlägigen Methoden erhalten werden. Eine bevorzugte Herstellungsweise ist die Hydrolyse der entsprechenden Dichlorphosphane mit Wasser bei Temperaturen von etwa 60 bis etwa 100°C, vorzugsweise von etwa 80 bis etwa 95°C, gemäß dem Verfahren der gleichzeitig eingereichten Patentanmeldung EP-A-0 080 149.

Für das erfindungsgemäße Verfahren einsetzbare beispielhafte Alkohole sind n-Butanol, Isobutanol, n-Pentanol, 3-Methylbutanol, n-Hexanol, n-Octanol, 2-Ethylhexanol, n-Dodecanol, n-Octadecanol. Von diesen Alkoholen wiederum sind die primären bevorzugt.

Auch Alkoholgemische sind im Prinzip einsetzbar; es werden dann allerdings auch entsprechende Gemische von Phosphonigsäuremonoalkylestern erhalten.

Die Alkohole werden zweckmäßig im Überschuß bis etwa 200% verwendet. Höhere Überschüsse sind möglich, aber kaum vorteilhaft.

Zur Durchführung des erfindungsgemäßen Verfahrens kann die gesamte Alkoholmenge mit der phosphonigen Säure am Rückfluß erhitzt werden; man kann aber auch nur einen Teil des gesamten Alkohols zum Sieden erhitzen, während man ein Gemisch der phosphonigen Säure und des Restes des Alkohols zufließen läßt. Andererseits ist es auch möglich, die phosphonige Säure mit einem Teil des Alkohols zu erhitzen, während der Rest des Alkohols zufließen gelassen wird. Das gebildete Reaktionswasser wird zweckmäßig mit Hilfe eines Wasserabscheiders azeotrop entfernt, während der abdestillierte Alkohol fortlaufend in den Prozeß zurückgeführt wird.

Die Reaktion ist beendet, wenn praktisch keine nennenswerten Wassermengen mehr abgeschieden werden und die Säurezahl des Reaktionsgemisches einen niedrigen konstanten Wert erreicht hat.

Es kann — vor allem bei Verwendung höher siedender Alkohole — vorteilhaft sein, die Reaktion unter vermindertem Druck und/oder einer Inertgasatmosphäre durchzuführen; als Inertgas kommt hier insbesondere Stickstoff in Frage.

Bei Verwendung niedrig siedender Alkohole kann zwecks Gewährleistung der Aufrechterhaltung der erfindungsgemäß erforderlichen relativ hohen Reaktionstemperaturen gegebenenfalls auch unter erhöhtem Druck gearbeitet werden.

Es ist möglich, das Verfahren sowohl diskontinuierlich als auch kontinuierlich durchzuführen.

Nach Beendigung der Reaktion wird in üblicher Weise vorzugsweise destillativ aufgearbeitet, gegebenenfalls auch durch Kristallisation. Die bei dem Verfahren verwendeten überschüssigen Alkohole sind nach ihrer destillativen Rückgewinnung wieder einsetzbar. Die Destillationsrückstände enthalten stark angereicherte phosphonige Säuren, die ebenfalls wieder für das erfindungsgemäße Veresterungsverfahren einsetzbar sind.

Die nach diesem Verfahren mit Ausbeuten von durchweg etwa 90% d. Th. und darüber hergestellten Phosphonigsäuremonoalkylester sind von hoher Reinheit, insbesondere frei oder praktisch frei von Phosphan. Das Verfahren stellt daher einen erheblichen Fortschritt auf diesem Gebiet dar.

Die nun folgenden Beispiele sollen der weiteren Erläuterung der Erfindung dienen.

## Beispiel 1

320 g methanphosphonige Säure und 880 g 3-Methylbutanol-1 werden unter Rühren und unter Stickstoffatmosphäre erhitzt während 6 Stunden von 124—147°C. Gleichzeitig werden über eine

50-cm-Vigreux-Silbermantelkolonne mit Hilfe eines Wasserabscheiders 71 g Wasser abgetrennt. Bei einer anschließenden Destillation erhält man 520 g überschüssiges 3-Methylbutanol-1 mit einem Gehalt von 2% Bis-3-methylbutylether. Weiterhin werden 546 g Methanphosphonigsäuremono-3-methylbutylester, Kp.: 65—66° C/0,08 kPa, erhalten. Das entspricht einer Ausbeute von 91% d. Th. Der Destillationsrückstand beträgt 25 g und besteht im wesentlichen aus methanphosphoniger Säure bzw. Ester. Er ist frei von Phosphan-Geruch und erneut einsetzbar.

Beispiel 2

200 g methanphosphonige Säure und 440 g n-Pentanol werden wie in Beispiel 1 während 6 Stunden bei 134—163° C umgesetzt. Neben wiedereinsetzbarem überschüssigem n-Pentanol erhält man 340 g Methanphosphonigsäure-n-pentylester (Kp.: 75° C/0,1 kPa). Das entspricht einer Ausbeute von 91% d. Th. Der Destillationsrückstand beträgt 20 g. Er ist frei von Phosphangeruch und erneut einsetzbar.

Beispiel 3

200 g methanphosphonige Säure und 650 g 2-Ethyl-hexanol-1 werden wie in Beispiel 1 bei ca. 130 bis 155° C jedoch unter vermindertem Druck (60—23,5 kPa) 3 Stunden umgesetzt. Neben wiedereinsetzbarem 2-Ethyl-hexanol-1 erhält man 457 g Methanphosphonigsäure-2-ethylhexylester (Kp.: 92° C/0,08 kPa). Das entspricht einer Ausbeute von etwa 95% d. Th. Der Destillationsrückstand ist frei von Phosphangeruch und erneut einsetzbar.

Beispiel 4

212 g ethanphosphonige Säure und 500 g 3-Methylbutanol-1 werden wie in Beispiel 1 während 6 Stunden bei 125—150° C umgesetzt. Neben wiedereinsetzbarem überschüssigem 3-Methylbutanol-1 erhält man 330 g Ethanphosphonigsäure-3-methylbutylester (Kp.: 72° C/0,13 kPa). Das entspricht einer Ausbeute von 89% d. Th. Der Destillationsrückstand beträgt 21 g. Er ist frei von Phosphangeruch und erneut einsetzbar.

Beispiel 5

100 g benzolphosphonige Säure und 155 g 3-Methylbutanol-1 werden wie in Beispiel 1 bei 124—150° C während 4,5 Stunden umgesetzt. Neben wiedereinsetzbarem 3-Methylbutanol-1 erhält man 130 g Benzolphosphonigsäure-3-methylbutylester (Kp.: 125° C/0,04 kPa). Das entspricht einer Ausbeute von 90% d. Th.

Beispiel 6

97 g benzolphosphonige Säure und 66 g Isobutanol werden wie in Beispiel 1 bei 130—149° C während 25 Stunden umgesetzt; zugleich werden während dieser Reaktionsdauer portionsweise 36 g Isobutanol langsam zugetropft. Neben wiedereinsetzbarem Isobutanol erhält man 121 g Benzolphosphonigsäureisobutylester (Kp.: 95—97° C/0,013 kPa). Das entspricht einer Ausbeute von 90% d. Th.

**Patentanspruch**

Verfahren zur Herstellung von Phosphonigsäuremonoalkylestern durch Veresterung phosphoniger Säuren mit Alkoholen unter azeotroper Abscheidung des bei der Veresterung entstehenden Wassers, dadurch gekennzeichnet, daß man phosphonige Säuren der Formel

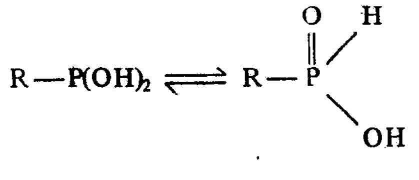

in welcher R = $C_1-C_4$-Alkyl, Benzyl oder Phenyl, mit Alkoholen der Formel

R'OH

in welcher R' = $C_4-C_{20}$-Alkyl, insbesondere $C_5-C_8$-Alkyl, bei Temperaturen von 125 bis 220° C, vorzugsweise von 130 bis 180° C, verestert.

**Claim**

A process for the preparation of monoalkyl phosphonites by the esterification of phosphonous acids with alcohols wherein the water formed in the esterification is separated off azeotropically, characterized in esterifying phosphonous acids of the formula

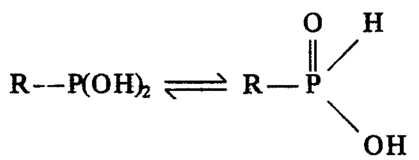

in which R = $C_1-C_4$-alkyl, benzyl or phenyl, with alcohols of the formula

R'OH

in which R' = $C_4-C_{20}$-alkyl, especially $C_5-C_8$-alkyl at temperatures of 125 to 220° C, preferably of 130 to 180° C.

**Revendication**

Procédé de préparation de phosphonites de mono-alkyles par estérification d'acides phosphoneux avec des alcools et, en même temps, élimination par distillation azéotropique de l'eau engendrée par l'estérification, procédé caractérisé en ce qu'on estérifie des acides phosphoneux répondant à la formule:

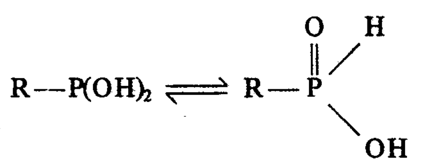

dans laquelle R représente un alkyle contenant de 1 à 4 atomes de carbone, un benzyle ou un phényle, avec des alcools répondant à la formule:

R'OH

dans laquelle R' représente un alkyle contenant de 4 à 20 atomes de carbone, plus spécialement de 5 à 8, à des températures de 125 à 220° C, de préférence de 130 à 180° C.